# FASCICULE DE BREVET EUROPEEN

(11) **EP 3 624 656 B1**
(45) Date de publication et mention de la délivrance du brevet: **09.06.2021**
(21) Numéro de dépôt: 18726107.8
(22) Date de dépôt: 16.05.2018
(51) Int. Cl.: A47J 43/042

(54) **APPAREIL DE MIXAGE ET DE MÉLANGE POUR DES PRÉPARATIONS ALIMENTAIRES LIQUIDES OU PATEUSES, ÉQUIPÉ D'UN SYSTÈME D'ENCLIQUETAGE D'UN PORTE-COUTEAU SUR UNE BAGUE DE VERROUILLAGE**
MIX- UND MISCHVORRICHTUNG FÜR FLÜSSIGE ODER PASTÖSE LEBENSMITTELZUBEREITUNGEN MIT EINEM SYSTEM ZUM EINRASTEN EINES KLINGENLHALTERS AUF EINEM VERRIEGELUNGSRING
MIXING AND BLENDING APPARATUS FOR LIQUID OR PASTY FOOD PREPARATIONS, PROVIDED WITH A SYSTEM FOR SNAP-FITTING A BLADE-HOLDER ONTO A LOCKING RING

(30) Priorité: 17.05.2017 FR 1754372
(43) Date de publication de la demande: 25.03.2020
(73) Titulaire: SEB S.A., 69130 Ecully (FR)
(72) Inventeur: FERON, Stéphanie, 53440 Marcille La Ville (FR); LEMARIE, Christophe, 53470 Martigne Sur Mayenne (FR); QUINTON, Sébastien, 53000 Laval (FR)
(74) Mandataire: SEB Développement
(86) Numéro de dépôt international: PCT/EP2018/062759
(87) Numéro de publication internationale: WO 2018/210942

(56) Documents cités:
- WO-A1-2016/077424
- CN-A- 103 976 667
- CN-U- 205 658 809
- CN-Y- 201 349 994

## Description

### Domaine technique

La présente invention concerne les appareils de mixage et de mélange pour des préparations alimentaires liquides ou pâteuses, de tels appareils étant couramment appelés « Blender ».

La présente invention concerne plus particulièrement les appareils du type précité comportant un porte-couteau amovible.

L'objet principal de l'invention est de faciliter le montage et le démontage de l'appareil.

### Etat de la technique

De tels appareils sont bien connus de l'homme du métier ; ils comprennent traditionnellement un bol, un porte-couteau, une bague de verrouillage du porte-couteau sur le bol et une base motorisée sur laquelle est engagé l'ensemble prémonté constitué du bol, du porte-couteau et de la bague de verrouillage. La base motorisée comprend un moteur entraînant un arbre muni d'un système d'accouplement qui coopère avec un système d'accouplement complémentaire sur le porte-couteau, lors de l'engagement de l'ensemble prémonté sur la base motorisée.

Certaines difficultés de manipulation de l'ensemble prémonté peuvent apparaître lors de son montage ou de son démontage, sur les appareils existants. L'utilisateur peut en effet éprouver des difficultés à maintenir provisoirement le porte-couteau engagé dans le fond du bol le temps de la mise en place de la bague de verrouillage sur le bol, servant audit maintien. Inversement, lors du retrait de la bague de verrouillage, le porte-couteau peut se dégager instantanément du bol, l'utilisateur ne pouvant le saisir du fait qu'il manipule avec une main le bol et avec l'autre main la bague de verrouillage.

Le modèle d'utilité chinois CN205658809U permet de pallier les inconvénients précités grâce à la mise en œuvre d'un système d'encliquetage entre le porte-couteau et la bague de verrouillage. Pour cela, le porte-couteau comprend un corps en forme de disque et deux languettes agencées symétriquement sous le corps, chacune des languettes comprenant un ergot de verrouillage. En outre la bague de verrouillage comprend un fond muni d'une ouverture. Lors de l'engagement du porte-couteau dans la bague de verrouillage, les languettes pénètrent dans l'ouverture jusqu'à ce que le corps soit en appui sur le fond, ce qui permet l'encliquetage des ergots sur le contour de l'ouverture, lequel est pris en sandwich entre lesdits ergots et le dessous du corps. Cette conception permet avantageusement de maintenir le porte-couteau sur la bague de verrouillage avant sa mise en place sur le bol. De même, lors du retrait de la bague de verrouillage, le porte-couteau reste assemblé avec celle-ci, ce qui facilite la manipulation.

### Résumé de l'invention

La présente invention a pour objectif de mettre en œuvre une alternative de conception d'un système d'encliquetage entre le porte-couteau et la bague de verrouillage afin de faciliter le montage et le démontage de l'ensemble prémonté.

Un autre objectif est de faciliter le décliquetage du porte-couteau pour son dégagement de la bague de verrouillage.

Un autre objectif est d'assurer un positionnement précis du porte-couteau sur la bague de verrouillage.

A ce titre, l'invention concerne un appareil de mixage et de mélange pour des préparations alimentaires qui comprend un ensemble prémonté constitué d'un bol, d'un porte-couteau et d'une bague de verrouillage. Le bol est muni d'un fond ouvert pour permettre l'insertion du porte-couteau. Le porte-couteau est muni d'un corps configuré pour être engagé dans le fond du bol. La bague de verrouillage est configurée pour être positionnée sur le fond du bol et maintenir le porte-couteau engagé dans ledit fond. Cette bague de verrouillage comprend un contour interne.

Selon l'invention, le contour interne de la bague de verrouillage comprend au moins deux pattes et le corps du porte-couteau comprend un contour externe inférieur comprenant une protubérance périphérique. Chacune des pattes comprend des moyens d'encliquetage configurés pour encliqueter ladite patte sur la protubérance périphérique lors de l'engagement du porte-couteau dans la bague de verrouillage, par une simple poussée sur le porte-couteau, et pour décliqueter ladite patte de la protubérance périphérique lors du dégagement du porte-couteau de la bague de verrouillage, par une simple traction sur le porte-couteau.

Ainsi, l'appareil selon l'invention assure un maintien du porte-couteau sur la bague de verrouillage. L'utilisateur positionne donc le porte-couteau sur la bague de verrouillage puis met en place ladite bague de verrouillage sur le bol, le porte-couteau s'engageant dans le fond du bol. Lors du retrait de la bague de verrouillage avec une main tout en maintenant le bol avec l'autre main, le porte-couteau reste assemblé avec ladite bague de verrouillage. L'utilisateur peut alors poser le bol puis saisir le porte-couteau avec cette autre main pour tirer dessus et le décliqueter automatiquement de la bague de verrouillage sans nécessiter aucune manipulation supplémentaire, contrairement à la conception du système d'encliquetage dans le modèle d'utilité chinois CN205658809U qui nécessite de pincer les languettes pour dégager les ergots du contour de l'ouverture sur la bague de verrouillage.

Selon l'invention, les moyens d'encliquetage sont configurés pour assurer le centrage du porte-couteau vis-à-vis de la bague de verrouillage concomitamment audit encliquetage. Cela assure un positionnement précis du porte-couteau vis-à-vis de la bague de verrouillage et du bol.

Selon l'invention, chacune des pattes est flexible, les moyens d'encliquetage étant mis en œuvre au moins par ladite flexibilité. Cette flexibilité des pattes peut suffire à leur encliquetage ou leur décliquetage vis-à-vis de la protubérance périphérique, chacune des pattes pouvant prendre appui directement sur ladite protubérance périphérique. Toutefois, selon une réalisation préférentielle, les moyens d'encliquetage comprennent un téton assurant ledit encliquetage. La présence du téton sur la patte permet à celui-ci de venir en appui sur la protubérance périphérique, ce qui réduit la surface de contact entre la patte et le corps durant l'encliquetage ou le décliquetage.

Selon une réalisation de l'appareil, chaque patte comprend une portion d'attache au contour interne et une languette s'étendant sensiblement en équerre à partir de la portion d'attache, la flexibilité permettant de déformer ladite languette. Dans les cas où la patte est munie d'un téton, ce téton est agencé sur la languette. De préférence la languette présente une extrémité libre agencée du côté d'un fond de la bague de verrouillage.

Selon une réalisation de l'appareil, chaque patte définit une portion circulaire. Cela contribue au centrage du porte-couteau sur la bague de verrouillage.

Dans une réalisation préférentielle de l'invention, l'appareil comprend quatre pattes uniformément réparties autour du contour interne. Deux ou trois pattes uniformément réparties pourraient suffire, selon des variantes de réalisation.

Dans une réalisation de l'appareil, la protubérance périphérique est agencée au niveau d'un bord inférieur du corps. On peut prévoir des variantes selon lesquelles la protubérance périphérique serait distante du bord inférieur sur le corps. De préférence, selon cette réalisation de l'appareil, la bague de verrouillage comprend un fond sur lequel vient en appui le bord inférieur du corps lors de la mise en place des moyens d'encliquetage.

Selon l'invention, l'appareil comprend un premier système d'assemblage qui est agencé entre le bol et la bague de verrouillage. De préférence, ce premier système d'assemblage est du type à baïonnette. On pourrait toutefois envisager un premier système d'assemblage de type vissage, sans sortir du cadre de l'invention.

Selon l'invention, le porte-couteau comprend des couteaux montés rotatifs et des premiers moyens d'accouplement assujettis aux couteaux. En outre, l'appareil comprend une base munie de moyens d'entrainement en rotation de seconds moyens d'accouplement complémentaires aux premiers moyens d'accouplement. Cette base est également munie d'une zone de réception configurée pour recevoir l'ensemble prémonté en accouplant les premiers et seconds moyens d'accouplement et en logeant la bague de verrouillage dans la zone de réception.

Selon l'invention, l'appareil comprend un second système d'assemblage agencé entre le bol et la base. Le montage de l'ensemble prémonté sur la base est ainsi réalisé par un assemblage entre le bol et la base, contrairement aux appareils antérieurs qui prévoient traditionnellement un montage de l'ensemble prémonté par un assemblage entre la bague de verrouillage et la base. En outre, selon l'invention, l'appareil comprend un système de butée agencé entre la zone de réception et la bague de verrouillage pour bloquer la bague de verrouillage en position assemblée sur le bol, le second système d'assemblage et le système de butée étant mis en place lors du montage de l'ensemble prémonté sur la base. Ainsi, une fois le bol assemblé avec la base, le système de butée s'oppose à toute rotation éventuelle de la bague de verrouillage durant la rotation du porte-couteau.

De préférence, ce second système d'assemblage est du type à baïonnette. On pourrait toutefois envisager un second système d'assemblage de type vissage, sans sortir du cadre de l'invention.

Selon une réalisation, le système de butée est configuré pour achever si nécessaire la mise en place du premier système d'assemblage entre la bague de verrouillage et le bol lors de la mise en place du second système d'assemblage entre le bol et la base. Ainsi, lorsque l'utilisateur a mal assemblé initialement la bague de verrouillage sur le bol, la configuration du système de butée garantit dans tous les cas que cet assemblage sera convenablement finalisé durant l'assemblage du bol sur la base, ce qui évite tout démontage inopiné de la bague de verrouillage lors du retrait du bol de la base en fin de préparation.

Selon une réalisation, le système de butée comprend au moins un doigt agencé dans un fond de la zone de réception et quatre lumières agencées dans un fond de la bague de verrouillage, le doigt s'engageant dans une des lumières en correspondance avec ledit doigt lors du logement de la bague de verrouillage dans la zone de réception.

De préférence, selon cette réalisation, lesdites au moins deux pattes sont agencées respectivement au-dessus d'au moins deux desdites lumières. Lorsque la bague de verrouillage comprend quatre pattes, chacune d'elles est agencée au-dessus de l'une des lumières.

### Brève description des figures

Les caractéristiques et avantages de l'invention apparaîtront à la lecture de la description suivante s'appuyant sur des figures, parmi lesquelles :
- la figure 1 illustre une vue d'ensemble d'un mode de réalisation de l'appareil selon l'invention ;
- la figure 2 illustre une vue en coupe de côté de l'appareil de la figure 1 ;
- la figure 3 illustre la base motorisée de cet appareil ;
- la figure 4 illustre l'ensemble prémonté constitué du bol, du porte-couteau et de la bague de verrouillage ;
- la figure 5 illustre le bol avec le porte-couteau engagé dans le bol ;
- la figure 6 illustre une vue de dessous du bol ;
- la figure 7 illustre le porte-couteau ;
- les figures 8 et 9 illustrent deux vues de la bague de verrouillage ;
- la figure 10 illustre une vue en coupe mettant en évidence le fond de la bague de verrouillage dans la zone de réception de la base ;
- la figure 11 illustre une vue en coupe du porte-couteau engagé dans la bague de verrouillage ;
- la figure 12 illustre une vue partielle agrandie de la bague de verrouillage en position dans la zone de réception sur la base de l'appareil.

### Description détaillée

La description suivante porte sur un mode de réalisation de l'appareil de mixage et de mélange pour des préparations alimentaires liquides ou pâteuses, chaudes ou froides, par exemple des soupes ou des milkshakes, un tel appareil étant généralement appelé un « blender ». Dans la suite de la description, le terme « appareil » sera utilisé.

Dans la suite de la description, les mêmes références sont utilisées pour désigner les mêmes caractéristiques, sauf indication contraire.

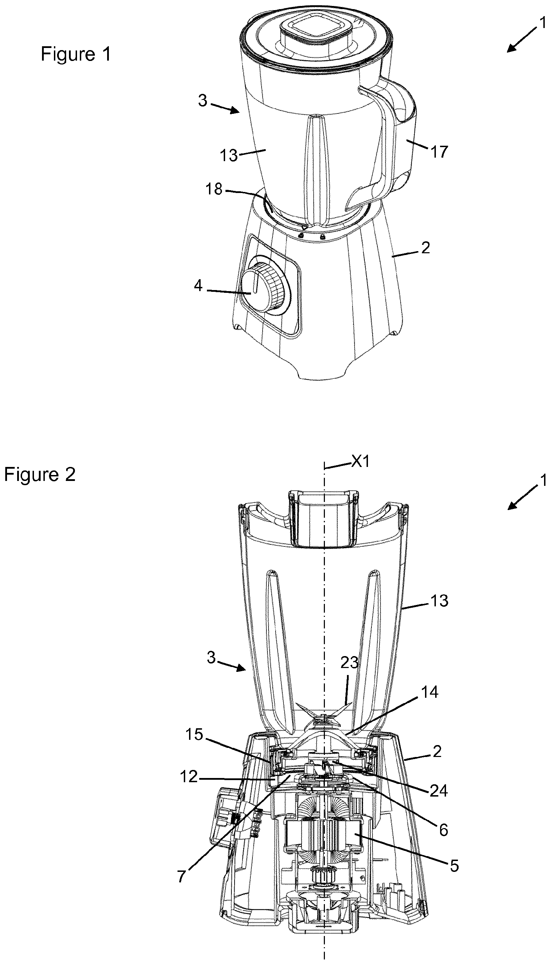

Tel qu'illustré sur les figures 1 à 4, l'appareil 1 comprend une base 2 sur laquelle vient se monter un ensemble prémonté 3. La base 2 intègre notamment un bouton de commande 4 qui permet d'actionner un moteur électrique 5, lequel entraîne en rotation selon un axe X1 une première pièce d'accouplement 6.

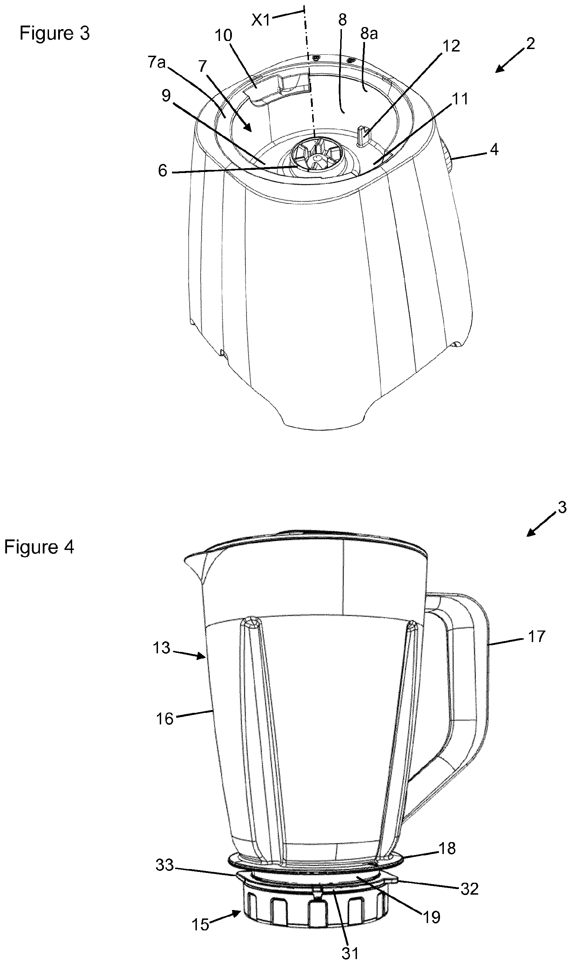

Tel qu'illustré sur la figure 3, la base 2 comprend une zone de réception 7 qui comprend un contour interne 8 et un fond 9 duquel émerge en son centre la première pièce d'accouplement 6. Le contour interne 8 comprend, sur sa partie supérieure 8a, deux rainures 10, 11 identiques. Les rainures 10, 11 sont disposées symétriquement par rapport à l'axe X1. Ces rainures 10, 11 débouchent sur un bord supérieur cylindrique 7a de la zone de réception 7 et présentent une forme préférentielle telle qu'illustrée en figure 3. Un doigt 12 émerge du fond 9 à proximité du contour interne 8, comme l'illustre la figure 3.

Tel que l'illustrent les figures 4 à 9, l'ensemble prémonté 3 est constitué d'un assemblage d'un bol 13, d'un porte-couteau 14 et d'une bague de verrouillage 15.

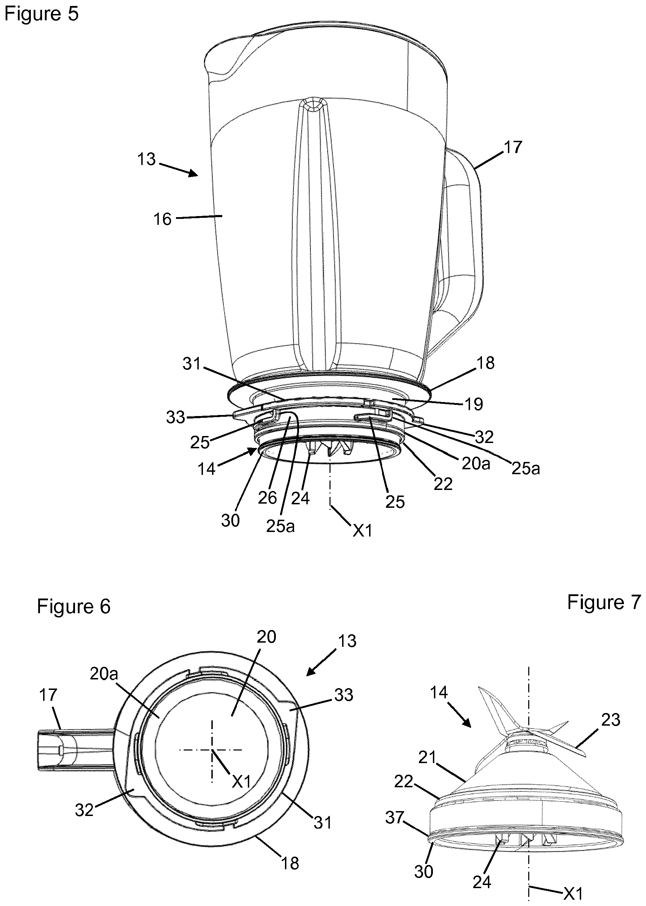

Comme le montrent les figures 5 à 7, le bol 13 comprend un contenant 16 de forme allongée muni d'une poignée 17 permettant la manipulation de l'ensemble prémonté 3. Le bol 13 comprend une collerette 18 qui sépare le contenant 16 d'une partie cylindrique inférieure 19. Une ouverture 20 dans le fond du bol 13 permet de loger le porte-couteau 14 dans la partie cylindrique inférieure 19. Le porte-couteau 14 comprend un corps 21 présentant une partie supérieure de forme tronconique adaptée à l'ouverture 20, le corps 21 portant un joint 22 prenant appui sur le bord 20a de l'ouverture 20, ce qui limite la pénétration du porte-couteau 14 dans le bol 13 et assure une étanchéité entre lesdits éléments.

Tel qu'illustré sur la figure 7, le porte-couteau 14 comprend des couteaux 23 qui sont entraînés en rotation selon l'axe X1 par une seconde pièce d'accouplement 24 débouchant sur la face inférieure du porte-couteau 14. Cette seconde pièce d'accouplement 24 vient engrener avec la première pièce d'accouplement 6 lors du montage de l'ensemble prémonté 3 sur la base 2, comme l'illustre la figure 2.

Tel que l'illustrent les figures 4, 5, 8 et 9, la bague de verrouillage 15 est assemblée avec la partie cylindrique inférieure 19 du bol 13 grâce à un premier système d'assemblage à baïonnette qui est mis en œuvre au moyen de quatre éléments saillants 25 agencés sur le contour externe 26 de cette partie cylindrique inférieure 19, tel qu'illustré sur la figure 5, et de quatre dents 27 agencées sur le contour interne 28 de la bague de verrouillage 15. Au moins un des éléments saillants 25 présente une butée 25a pour bloquer la rotation de la bague de verrouillage 15 en arrêtant l'une des dents 27. De préférence chacun des éléments saillants 25 présente une butée 25a pour bloquer la rotation de la bague de verrouillage 15 en arrêtant l'une des dents 27.

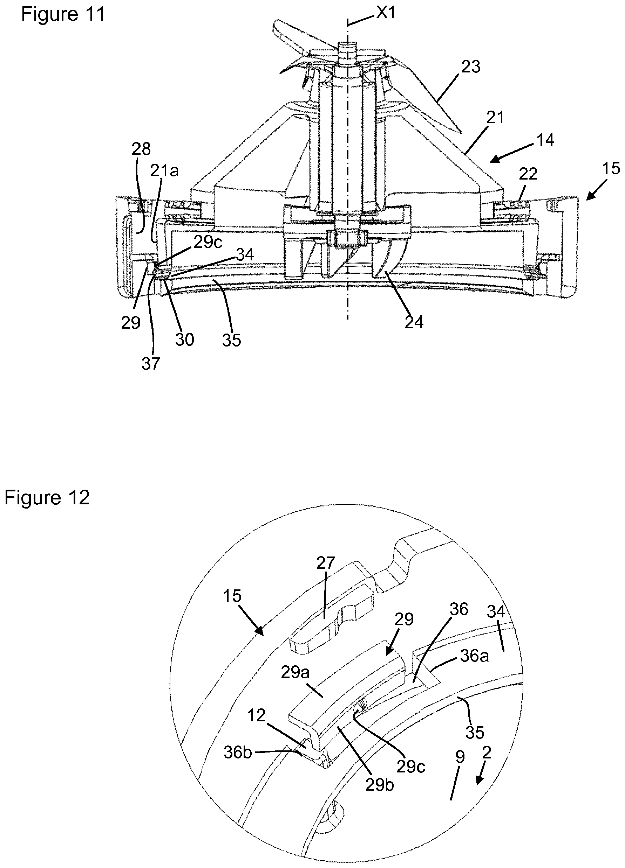

Tel que l'illustrent les figures 7 à 9 et 11 et 12, le contour interne 28 comprend également quatre pattes 29 uniformément réparties. Chaque patte 29 définit une portion circulaire. Lors de l'engagement du porte-couteau 14 sur la bague de verrouillage 15, le contour externe inférieur 21a du corps 21 vient se loger entre les pattes 29, ce qui permet de centrer de manière coaxiale selon l'axe X1 le porte-couteau 14 et la bague de verrouillage 15. Les pattes 29 comprennent chacune une portion d'attache 29a issue du contour interne 28. Chaque portion d'attache 29a s'étend radialement vers l'intérieur du contour interne 28. Chaque portion d'attache 29a est prolongée par une languette 29b s'étendant en équerre vers un fond 34 de la bague de verrouillage 15. Chaque patte 29 comprend également un téton 29c, de préférence de forme demi-sphérique, disposé sur la languette 29b, comme l'illustre la figure 12. Chaque patte 29 dispose d'une flexibilité permettant de déformer sensiblement la languette 29b de sorte à écarter les uns par rapport aux autres les tétons 29c durant l'engagement ou le dégagement du porte-couteau 14. Cet écartement des tétons 29c est assuré par la présence d'une protubérance périphérique 37 agencée au niveau du bord inférieur 30 du porte-couteau 14, cette protubérance périphérique 37 prenant appui sur les tétons 29c lors de l'engagement ou du dégagement du porte-couteau 14. Lors de l'engagement du porte-couteau 14 sur la bague de verrouillage 15, la protubérance périphérique 37 appuie sur le dessus des tétons 29c, ce qui les écarte. Les tétons 29c reprennent ensuite leur position normale du fait de la flexibilité, ce qui les positionne au-dessus de la protubérance périphérique 37, bloquant ainsi le dégagement du porte-couteau 14 en l'absence d'une traction exercée avec la main sur le porte-couteau 14. Le porte-couteau 14 est alors encliqueté sur la bague de verrouillage 15. L'ensemble constitué du porte-couteau 14 et de la bague de verrouillage 15 peut ensuite être assemblé avec le bol 13 pour former l'ensemble prémonté 3. Lors du démontage de cet ensemble prémonté 3, le retrait de la bague de verrouillage 15 vis-à-vis du bol 13 extrait concomitamment le porte-couteau 14 qui reste solidaire de ladite bague de verrouillage 15. En exerçant ensuite une force de traction sur le corps 21, la protubérance périphérique 37 appuie sur le dessous des tétons 29c, ce qui les écarte et décliquète le porte-couteau 14 de la bague de verrouillage 15. En position encliquetée, le bord inférieur 30 du corps 21 vient en appui sur le fond 34 de la bague de verrouillage 15, comme l'illustre la figure 11.

Tel que l'illustrent les figures 4 à 6, la partie cylindrique inférieure 19 comprend sur son contour externe 26 un épaulement 31 qui est muni de deux ailettes 32, 33 disposées symétriquement par rapport à l'axe X1. Un second système d'assemblage à baïonnette est mis en œuvre entre le bol 13 et la base 2 au moyen de ces ailettes 32,33 qui viennent s'engager respectivement dans les rainures 10, 11 précitées. Le verrouillage du bol 13 sur la base 2 est effectué en insérant les ailettes 32, 33 dans les rainures 10, 11 par le bord supérieur cylindrique 7a de la zone de réception 7, puis en effectuant une rotation du bol 13 jusqu'à ce que les ailettes 32, 33 soient logées dans lesdites rainures 10, 11. La collerette 18 vient en appui sur le bord supérieur cylindrique 7a de la zone de réception 7, ce qui délimite la position d'enfoncement de la bague de verrouillage 15 dans la zone de réception 7. De préférence, les ailettes 32, 33 et les rainures 10, 11 sont dimensionnées pour que le verrouillage à baïonnette soit mis en place en effectuant une rotation du bol 13 par rapport à la base 2 comprise entre quinze degrés (15°) et vingt-cinq degrés (25°), de préférence égale à vingt degrés (20°).

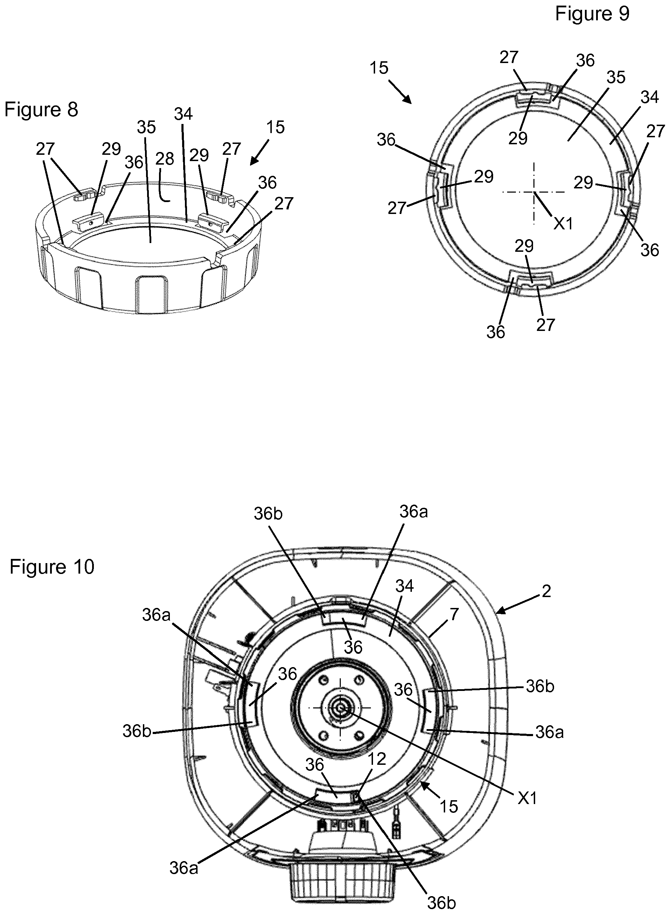

Tel que l'illustrent les figures 2, 3 et 8 à 10, la bague de verrouillage 15 coopère avec le doigt 12 dans la zone de réception 7 lorsque l'ensemble prémonté 3 est positionné sur la base 2 et que l'assemblage est mis en place entre le bol 13 et ladite base 2. Le fond 34 de la bague de verrouillage 15 est muni d'une ouverture 35 permettant le passage de la première pièce d'accouplement 6 lors de l'insertion de la bague de verrouillage 15 et de la partie cylindrique inférieure 19 du bol 13 dans la zone de réception 7, pour son engrènement avec la seconde pièce d'accouplement 24. Ce fond 34 comprend quatre lumières 36 uniformément réparties autour dudit fond 34 et présentant une forme circulaire ou incurvée. Les quatre pattes 29 sont disposées respectivement au-dessus de ces quatre lumières 36, comme l'illustrent les figures 8, 9 et 12. Lorsque les ailettes 32, 33 du bol 13 sont engagées dans les rainures 10, 11 de la base 2 et que la collerette 18 vient en appui sur le bord supérieur cylindrique 7a de la zone de réception 7, délimitant ainsi l'emboîtement de l'ensemble prémonté 3 sur la base 2, le doigt 12 s'engage dans l'une des lumières 36, au niveau de l'une 36a de ses deux extrémités 36a, 36b. Puis, une fois le verrouillage à baïonnette réalisé entre le bol 13 et la base 2, les ailettes 32,33 étant insérées dans les rainures 10, 11 par rotation du bol 13 sur la base 2, de préférence de vingt degrés (20°), ledit doigt 12 vient se loger dans l'autre 36b des deux extrémités 36a, 36b de la lumière 36. Ainsi, durant l'actionnement du moteur 5 entraînant le porte-couteau 14, le doigt 12 assure une butée contre l'extrémité 36b de la lumière 36, ce qui empêche toute rotation éventuelle de la bague de verrouillage 15. On garantit ainsi que la bague de verrouillage 15 reste convenablement assemblée avec le bol 13 grâce au doigt 12 qui est en butée contre l'une des lumières 36.

Il arrive que l'utilisateur assemble mal la bague de verrouillage 15 sur le bol 13 avant de mettre en place l'ensemble prémonté 3 sur la base 2, c'est-à-dire qu'il ne tourne pas complètement la bague de verrouillage 15 sur le bol 13 jusqu'à ce que les dents 27 viennent se loger complètement dans le fond des éléments saillants 25. Dans ce cas, lorsque l'utilisateur procède ensuite à l'assemblage du bol 13 sur la base 2, le doigt 12 prend appui contre l'extrémité 36b de la lumière 36 durant la rotation dudit bol 13 sur ladite base 2, avant même que le bol 13 soit totalement verrouillé sur la base 2, cette rotation permettant alors d'achever la rotation de la bague de verrouillage 15 sur le bol 13 jusqu'à ce que les dents 27 soient convenablement logées dans le fond des éléments saillants 25.

On comprend que les lumières 36 sur la bague de verrouillage 15 seront dimensionnées en rapport avec les dimensions des ailettes 32, 33 et des rainures 10, 11, afin de permettre un verrouillage du bol 13 sur la base 2 par une rotation de quinze degrés (15°) à vingt-cinq degrés (25°), de préférence de vingt degrés (20°).

La description qui précède d'un mode de réalisation de l'appareil 1 n'a aucun caractère limitatif, des variantes pouvant être envisagées sans sortir du cadre de l'invention.

On peut par exemple prévoir un deuxième doigt similaire au doigt 12 et disposé symétriquement à celui-ci par rapport à l'axe X1, dans le fond 9 de la zone de réception 7 sur la base 2.

On pourrait aussi remplacer le système d'assemblage à baïonnette entre le bol 13 et la bague de verrouillage 15 par un système d'assemblage par vissage. Il en est de même pour le système d'assemblage entre le bol 13 et la base 2.

On pourrait aussi positionner la protubérance périphérique 37 à une autre hauteur sur le contour externe inférieur 21a du corps 21, c'est-à-dire de manière distante par rapport au bord inférieur 30 sur le corps 21. Il convient dans ce cas d'ajuster également la position des pattes 29 sur le contour interne 28 de la bague de verrouillage 15, voire les positions des tétons 29c sur ces pattes 29. On peut également prévoir des pattes 29 flexibles de forme différente, voire remplacer les tétons 29c par des bourrelets de forme incurvée s'étendant le long des languettes 29b.

Le mode de réalisation de l'appareil 1 décrit précédemment permet avantageusement de positionner l'ensemble prémonté 3 selon deux positions sur la base 2, avec la poignée 17 à droite ou à gauche du bouton de commande 4. On pourrait envisager une variante simplifiée permettant un seul positionnement de l'ensemble prémonté 3 sur la base 2.

La présente invention n'est nullement limitée aux exemples de réalisation décrits et à leurs variantes, mais englobe de nombreuses modifications dans le cadre des revendications.

## Revendications

1. Appareil (1) de mixage et de mélange pour des préparations alimentaires qui comprend un ensemble prémonté (3) constitué :
- d'un bol (13) muni d'un fond ouvert ;
- d'un porte-couteau (14) muni d'un corps (21) configuré pour être engagé dans le fond du bol (13) ;
- d'une bague de verrouillage (15) configurée pour être positionnée sur le fond du bol (13) et maintenir le porte-couteau (14) engagé dans ledit fond, la bague de verrouillage (15) comprenant un contour interne (28),
**caractérisé en ce que** le contour interne (28) comprend au moins deux pattes (29) et **en ce que** le corps (21) comprend un contour externe inférieur (21a) comprenant une protubérance périphérique (37), chacune desdites au moins deux pattes (29) comprenant des moyens d'encliquetage configurés pour encliqueter ladite patte (29) sur la protubérance périphérique (37) lors de l'engagement du porte-couteau (14) dans la bague de verrouillage (15) et pour décliqueter ladite patte (29) de la protubérance périphérique (37) lors du dégagement du porte-couteau (14) de la bague de verrouillage (15).

2. Appareil (1) selon la revendication 1, **caractérisé en ce que** les moyens d'encliquetage sont configurés pour assurer le centrage du porte-couteau (14) vis-à-vis de la bague de verrouillage (15) concomitamment audit encliquetage.

3. Appareil (1) selon l'une des revendications 1 ou 2, **caractérisé en ce que** chacune des pattes (29) est flexible, les moyens d'encliquetage étant mis en œuvre au moins par ladite flexibilité.

4. Appareil (1) selon la revendication 3, **caractérisé en ce que** les moyens d'encliquetage comprennent un téton (29c) assurant ledit encliquetage.

5. Appareil (1) selon l'une des revendications 3 ou 4, **caractérisé en ce que** chaque patte (29) comprend une portion d'attache (29a) au contour interne (28) et une languette (29b) s'étendant sensiblement en équerre à partir de la portion d'attache (29a), la flexibilité permettant de déformer ladite languette (29b).

6. Appareil (1) selon la revendication 5 rattachée à la revendication 4, **caractérisé en ce que** le téton (29c) est agencé sur la languette (29b).

7. Appareil (1) selon l'une des revendications 1 à 6, **caractérisé en ce que** chaque patte (29) définit une portion circulaire.

8. Appareil (1) selon l'une des revendications 1 à 7, **caractérisé en ce qu'**il comprend quatre pattes (29) uniformément réparties autour du contour interne (28).

9. Appareil (1) selon l'une des revendications 1 à 8, **caractérisé en ce que** la protubérance périphérique (37) est agencée au niveau d'un bord inférieur (30) du corps (21).

10. Appareil (1) selon la revendication 9, **caractérisé en ce que** la bague de verrouillage (15) comprend un fond (34) sur lequel vient en appui le bord inférieur (30) du corps (21) lors de la mise en place des moyens d'encliquetage.

11. Appareil (1) selon l'une des revendications 1 à 10, **caractérisé en ce qu'**un premier système d'assemblage (25, 27) est agencé entre le bol (13) et la bague de verrouillage (15).

12. Appareil (1) selon la revendication 11, **caractérisé en ce que** le premier système d'assemblage (25, 27) est du type à baïonnette.

13. Appareil (1) selon l'une des revendications 1 à 12, **caractérisé en ce que** le porte-couteau (14) comprend des couteaux (23) montés rotatifs et des premiers moyens d'accouplement (24) assujettis aux couteaux (23), ledit appareil (1) comprenant une base (2) munie de moyens d'entrainement (5) en rotation de seconds moyens d'accouplement (6) complémentaires aux premiers moyens d'accouplement (24) et d'une zone de réception (7) configurée pour recevoir l'ensemble prémonté (3) en accouplant les premiers et seconds moyens d'accouplement (24, 6) et en logeant la bague de verrouillage (15) dans la zone de réception (7).

14. Appareil (1) selon la revendication 13, **caractérisé en ce qu'**il comprend un second système d'assemblage (10, 11, 32, 33) agencé entre le bol (13) et la base (2) et un système de butée (12, 36) agencé entre la zone de réception (7) et la bague de verrouillage (15) pour bloquer la bague de verrouillage (15) en position assemblée sur le bol (13), le second système d'assemblage (10, 11, 32, 33) et le système de butée (12, 36) étant mis en place lors du montage de l'ensemble prémonté (3) sur la base (2).

15. Appareil (1) selon la revendication 14, **caractérisé en ce que** le second système d'assemblage (10, 11, 32, 33) est du type à baïonnette.

16. Appareil (1) selon l'une des revendications 14 ou 15, **caractérisé en ce que** le système de butée (12, 36) comprend au moins un doigt (12) agencé dans un fond (9) de la zone de réception (7) et quatre lumières (36) agencées dans un fond (34) de la bague de verrouillage (15), le doigt (12) s'engageant dans une des lumières (36) en correspondance avec ledit doigt (12) lors du logement de la bague de verrouillage (15) dans la zone de réception (7).

17. Appareil (1) selon la revendication 16, **caractérisé en ce que** les au moins deux pattes (29) sont agencées respectivement au-dessus d'au moins deux desdites lumières (36).

## Patentansprüche

1. Misch- und Vermengungsvorrichtung (1) für Nahrungsmittelzubereitungen, die eine vormontierte Einheit (3) umfasst, die aus Folgendem besteht:
- einem Behälter (13) mit einem offenen Boden;
- einem Messerträger (14) mit einem Körper (21), der konfiguriert ist, in den Boden des Behälters (13) eingesetzt zu werden;
- einem Verriegelungsring (15), der konfiguriert ist, auf dem Boden des Behälters (13) positioniert zu werden und den im besagten Boden eingesetzten Messerträger (14) zu halten, wobei der Verriegelungsring (15) eine innere Kontur (28) umfasst,
**dadurch gekennzeichnet, dass** die innere Kontur (28) mindestens zwei Laschen (29) umfasst und dass der Körper (21) eine untere äußere Kontur (21a) umfasst, die einen umlaufenden Vorsprung (37) umfasst, wobei jede der mindestens zwei Laschen (29) Einrastmittel umfasst, die konfiguriert sind, besagte Lasche (29) beim Einsetzen des Messerträgers (14) im Verriegelungsring (15) am umlaufenden Vorsprung (37) einzurasten und besagte Lasche (29) beim Lösen des Messerträgers (14) vom Verriegelungsring (15) vom umlaufenden Vorsprung (37) zu lösen.

2. Vorrichtung (1) nach Anspruch 1, **dadurch gekennzeichnet, dass** die Einrastmittel konfiguriert sind, gleichzeitig mit dem Einrasten die Zentrierung des Messerträgers (14) gegenüber dem Verriegelungsring (15) zu gewährleisten.

3. Vorrichtung (1) nach einem der Ansprüche 1 oder 2, **dadurch gekennzeichnet, dass** jede der Laschen (29) flexibel ist, wobei die Einrastmittel mindestens durch besagte Flexibilität realisiert werden.

4. Vorrichtung (1) nach Anspruch 3, **dadurch gekennzeichnet, dass** die Einrastmittel einen Zapfen (29c) umfassen, der besagtes Einrasten gewährleistet.

5. Vorrichtung (1) nach einem der Ansprüche 3 oder 4, **dadurch gekennzeichnet, dass** jede Lasche (29) einen Verbindungsabschnitt (29a) an der inneren Kontur (28) und eine Zunge (29b), die sich im Wesentlichen senkrecht zum Verbindungsabschnitt (29a) erstreckt, umfasst, wobei die Flexibilität die Deformation der besagten Zunge (29b) ermöglicht.

6. Vorrichtung (1) nach Anspruch 5 in Verbindung mit Anspruch 4, **dadurch gekennzeichnet, dass** der Zapfen (29c) auf der Zunge (29b) angeordnet ist.

7. Vorrichtung (1) nach einem der Ansprüche 1 bis 6, **dadurch gekennzeichnet, dass** jede Lasche (29) einen kreisförmigen Abschnitt definiert.

8. Vorrichtung (1) nach einem der Ansprüche 1 bis 7, **dadurch gekennzeichnet, dass** sie vier Laschen (29) umfasst, die gleichmäßig um die innere Kontur (28) verteilt sind.

9. Vorrichtung (1) nach einem der Ansprüche 1 bis 8, **dadurch gekennzeichnet, dass** der umlaufende Vorsprung (37) an einem unteren Rand (30) des Körpers (21) angeordnet ist.

10. Vorrichtung (1) nach Anspruch 9, **dadurch gekennzeichnet, dass** der Verriegelungsring (15) einen Boden (34) umfasst, an dem der untere Rand (30) des Körpers (21) bei der Positionierung der Einrastmittel in Anlage gelangt.

11. Vorrichtung (1) nach einem der Ansprüche 1 bis 10, **dadurch gekennzeichnet, dass** ein erstes Montagesystem (25, 27) zwischen dem Behälter (13) und dem Verriegelungsring (15) angeordnet ist.

12. Vorrichtung (1) nach Anspruch 11, **dadurch gekennzeichnet, dass** das erste Montagesystem (25, 27) vom Typ eines Bajonetts ist.

13. Vorrichtung (1) nach einem der Ansprüche 1 bis 12, **dadurch gekennzeichnet, dass** der Messerträger (14) drehbar gelagerte Messer (23) und an den Messern (23) angebrachte erste Kupplungsmittel (24) umfasst, wobei besagte Vorrichtung (1) eine Basis (2), die mit Antriebsmitteln (5) zum Drehen von zweiten Kupplungsmitteln (6) zusätzlich zu den ersten Kupplungsmitteln (24) und einem Aufnahmebereich (7), der konfiguriert ist, die vormontierte Einheit (3) durch Kupplung der ersten und zweiten Kupplungsmittel (24, 6) und Aufnahme des Verriegelungsrings (15) im Aufnahmebereich (7) aufzunehmen, versehen ist, umfasst.

14. Vorrichtung (1) nach Anspruch 13, **dadurch gekennzeichnet, dass** sie ein zweites Montagesystem (10, 11, 32, 33), das zwischen dem Behälter (13) und der Basis (2) angeordnet ist, und ein Anschlagsystem (12, 36), das zwischen dem Aufnahmebereich (7) und dem Verriegelungsring (15) angeordnet ist, um den Verriegelungsring (15) in montierter Position am Behälter (13) zu blockieren, umfasst, wobei das zweite Montagesystem (10, 11, 32, 33) und das Anschlagsystem (12, 36) bei der Montage der vormontierten Einheit (3) an der Basis (2) in Position gebracht werden.

15. Vorrichtung (1) nach Anspruch 14, **dadurch gekennzeichnet, dass** das zweite Montagesystem (10, 11, 32, 33) vom Typ eines Bajonetts ist.

16. Vorrichtung (1) nach einem der Ansprüche 14 oder 15, **dadurch gekennzeichnet, dass** das Anschlagystem (12, 36) mindestens einen im Boden (9) des Aufnahmebereichs (7) angeordneten Stift (12) und vier in einem Boden (34) des Verriegelungsrings (15) angeordnete Schlitze (36) umfasst, wobei der Stift (12) bei der Aufnahme des Verriegelungsrings (15) im Aufnahmebereich (7) in einen der Schlitze (36) in Übereinstimmung mit besagtem Stift (12) eingreift.

17. Vorrichtung (1) nach Anspruch 16, **dadurch gekennzeichnet, dass** die mindestens zwei Laschen (29) jeweils über den mindestens zwei Schlitzen (36) angeordnet sind.

## Claims

1. Mixing and blending apparatus (1) for food preparations, which comprises a pre-mounted assembly (3) consisting of:
- a bowl (13) provided with an open bottom;
- a blade-holder (14) equipped with a body (21) configured to be engaged in the bottom of the bowl (13);
- a locking ring (15) configured to be positioned on the bottom of the bowl (13) and to keep the blade-holder (14) engaged in said bottom, the locking ring (15) comprising an inner contour (28),
**characterised in that** the inner contour (28) comprises at least two tabs (29) and **in that** the body (21) comprises a lower outer contour (21a) comprising a peripheral projection (37), each of said at least two tabs (29) comprising snap-fitting means configured to snap-fit said tab (29) onto the peripheral projection (37) when the blade-holder (14) is engaged in the locking ring (15), and to release said tab (29) from the peripheral projection (37) when the blade-holder (14) is disengaged from the locking ring (15).

2. Apparatus (1) according to claim 1, **characterised in that** the snap-fitting means are configured to ensure the centring of the blade-holder (14) vis-à-vis the locking ring (15) together with said snap-fitting.

3. Apparatus (1) according to one of claims 1 or 2, **characterised in that** each of the tabs (29) is flexible, the snap-fitting means being set in place at least by said flexibility.

4. Apparatus (1) according to claim 3, **characterised in that** the snap-fitting means comprise a nipple (29c) ensuring said snap-fitting.

5. Apparatus (1) according to one of claims 3 or 4, **characterised in that** each tab (29) comprises a portion for fastening (29a) to the inner contour (28) and a strip (29b) extending substantially square from the fastening portion (29a), the flexibility allowing to deform said strip (29b).

6. Apparatus (1) according to claim 5 connected to claim 4, **characterised in that** the nipple (29c) is arranged on the strip (29b).

7. Apparatus (1) according to one of claims 1 to 6, **characterised in that** each tab (29) defines a circular portion.

8. Apparatus (1) according to one of claims 1 to 7, **characterised in that** it comprises four tabs (29) evenly distributed around the inner contour (28).

9. Apparatus (1) according to one of claims 1 to 8, **characterised in that** the peripheral projection (37) is arranged at the level of a lower edge (30) of the body (21).

10. Apparatus (1) according to claim 9, **characterised in that** the locking ring (15) comprises a bottom (34) on which bears the lower edge (30) of the body (21) during the setting in place of the snap-fitting means.

11. Apparatus (1) according to one of claims 1 to 10, **characterised in that** a first assembly system (25, 27) is arranged between the bowl (13) and the locking ring (15).

12. Apparatus (1) according to claim 11, **characterised in that** the first assembly system (25, 27) is of the bayonet type.

13. Apparatus (1) according to one of claims 1 to 12, **characterised in that** the blade-holder (14) comprises blades (23) rotatably mounted and first coupling means (24) subservient to the blades (23), said apparatus (1) comprising a base (2) provided with means for rotating (5) second coupling means (6) complementary to the first coupling means (24) and a receiving area (7) configured to receive the pre-mounted assembly (3) by coupling the first and second coupling means (24, 6) and by housing the locking ring (15) in the receiving area (7).

14. Apparatus (1) according to claim 13, **characterised in that** it comprises a second assembly system (10, 11, 32, 33) arranged between the bowl (13) and the base (2) and a stop system (12, 36) arranged between the receiving area (7) and the locking ring (15) to lock the locking ring (15) in the assembled position on the bowl (13), the second assembly system (10, 11, 32, 33) and the stop system (12, 36) being set in place when the pre-mounted assembly (3) is mounted on the base (2).

15. Apparatus (1) according to claim 14, **characterised in that** the second assembly system (10, 11, 32, 33) is of the bayonet type.

16. Apparatus (1) according to one of claims 14 or 15, **characterised in that** the stop system (12, 36) comprises at least one finger (12) arranged in a bottom (9) of the receiving area (7) and four spaces (36) arranged in a bottom (34) of the locking ring (15), the finger (12) being engaged in one of the spaces (36) corresponding with said finger (12) during the housing of the locking ring (15) in the receiving area (7).

17. Apparatus (1) according to claim 16, **characterised in that** the at least two tabs (29) are arranged respectively above at least two of said spaces (36).
